# EUROPÄISCHE PATENTANMELDUNG

(11) **EP 1 880 609 A2**
(43) Veröffentlichungstag der Anmeldung: **23.01.2008**
(21) Anmeldenummer: 07450128.9
(22) Anmeldetag: 20.07.2007
(51) Int. Cl.: A21C 1/00, A21D 8/02, A21C 1/14

(54) **Verfahren zur Herstellung eines Bäckereiprodukt Teiges**

(30) Priorität: 21.07.2006 AT 12482006
(71) Anmelder: Ströck Bio-Brot Produktions GmbH, 1220 Wien (AT)
(72) Erfinder: Slancar , Martin, 3550 Langenlois (AT)
(74) Vertreter: Ellmeyer, Wolfgang

(57) **Zusammenfassung**

Verfahren zur Herstellung eines Bäckereiprodukt-Teiges, wobei ein Anmischen eines Sauerteiges unter Zuführung von Sauerteigkomponenten und eine Weiterverarbeitung wie z.B. Versäuerung, Vergärung und Verarbeitung zu einem Bäckereiprodukt-Teig in zwei oder mehreren Herstellungsschritten erfolgt, und der Sauerteig zwischen den Herstellungsschritten gefördert wird, wobei der Sauerteig bei einer Teigausbeute TA in einem Bereich von 150 bis 170 - jeweils ohne weiterer Beigabe von Wasser als Mittel zur Verbesserung der Förderfähigkeit - zwischen zumindest zwei der Herstellungsschritte mechanisch gefördert wird.

## Beschreibung

Die Erfindung betrifft ein Verfahren zur Herstellung eines Bäckereiprodukt-Teiges, wobei ein Anmischen eines Sauerteiges unter Zuführung von Sauerteigkomponenten und eine Weiterverarbeitung wie z.B. Versäuerung, Vergärung und Verarbeitung zu einem Bäckereiprodukt-Teig in zwei oder mehreren Herstellungsschritten erfolgt, und der Sauerteig zwischen den Herstellungsschritten gefördert wird.

Sauerteig wird vor seiner Verarbeitung üblicherweise zur Versäuerung (Reife) gebracht, was in mehreren Schritten, nämlich Ausbilden von Anstreugut, Anfrischsauerteig und Grundsauerteig geschehen kann und eine gewisse Reifezeit in Anspruch nimmt. Durch biochemische Reaktionsabläufe unter Einsatz von Mikroorganismen entsteht dabei aus dem ursprünglichen Mehl-Wasser-Gemisch der Sauerteig. Danach ist er fertig zur Weiterverarbeitung, welche nach einem genauen Zeitplan zu erfolgen hat.

Ein wesentlicher Punkt ist dabei die Konsistenz des Grundsauerteigs, weil diese auch die biologischen Prozesse beeinflußt. Charakterisiert wird die Konsistenz über die sogenannte Teigausbeute TA, die beispielsweise bei etwa 160 liegt.

Bei Teigausbeute TA im Bereich von 150 bis 170 ist der Sauerteig hochviskos und klebrig. Der gereifte Sauerteig weist auch einen erheblichen Anteil an Gasblasen auf.

Da der Grundsauerteig dieser Konsistenz Gasblasen aufweist, hoch viskos und klebrig ist, wurde dieser bisher mit Wasser verdünnt, um ihn zu einer nachfolgenden verfahrenstechnischen Behandlungsstufe, z.B. zur Brotherstellung pumpen und dort weiterverarbeiten zu können.

So ist z.B. in der DE 87 15 550 U1 angegeben, daß ein Vorteig mit TA 160 in einem Behälter hergestellt und unmittelbar vor der Verwendung durch Zusetzen von Wasser schnell pumpfähig gemacht wird, um Portionen für die Erstellung von Teigen aus dem Behälter zu pumpen.

Die Verdünnung mit Wasser bedingt jedoch eine deutlich spürbare Qualitätsverminderung, die in den meisten Fällen durch künstliche Zugabe von Hefen auszugleichen versucht wird. Dieser Kunstgriff führt aber nicht zu vollkommen zufriedenstellenden Resultaten in geschmacklicher Hinsicht und verhindert auch eine traditionelle Brotherstellung, wie sie Voraussetzung für eine gewünschte biologische Herstellung von Brot wäre. Letzteres Qualitätsmerkmal bringt entscheidende Wettbewerbsvorteile, die der Sicherung von Marktanteilen dienlich sein können.

Aufgabe der Erfindung ist es daher, ein Verfahren der eingangs genannten Art anzugeben, bei dem der ursprüngliche Sauerteig bei relativ geringer Teigausbeute in großen Mengen ohne Qualitätsverlust für eine Teigherstellung verwendet bzw. dosiert werden kann.

Weitere Aufgabe der Erfindung ist es, ein Verfahren anzugeben, welches die Vermeidung von Fehlgärungen und Erzielung eines hohen Anteils an Milchsäurebakterien durch Verwendung eines Sauerteigs mit hoher Viskosität und relativ geringer Teigausbeute TA ermöglicht.

Weitere Aufgabe ist die Vermeidung des zusätzlichen Einsatzes von Hefen, die Allergien auslösen können.

Weitere Aufgabe der Erfindung ist die Erzeugung eines tatsächlichen "biologischen" Sauerteigs, welcher eine Teigherstellung ermöglicht, die nur natürliche biologische Prozesse verwendet.

Weiteres Ziel der Erfindung ist eine Kostenersparnis durch Entfall der Beigabe von Hefen, die zugekauft werden müssen.

Erfindungsgemäß wird dies dadurch erreicht, daß der Sauerteig bei einer Teigausbeute TA in einem Bereich von 150 bis 170 - jeweils ohne weiterer Beigabe von Wasser als Mittel zur Verbesserung der Förderfähigkeit - zwischen zumindest zwei der Herstellungsschritte mechanisch gefördert wird.
Auf diese Weise kann die Verdünnung des Sauerteiges durch Wasser vor dem Fördern und die Beigabe von Hefen unterbleiben. Es kann der Grundsauerteig unter Einhaltung eines genauen Zeitplans in einem großtechnischen Maßstab zu einer Vergärungsstufe gefördert und nach dem Vergären zur Herstellung des Bäckereiproduktes weitergefördert werden, wo er mit Hilfe des Fördermittels exakt zudosiert werden kann.

Bisher konnte die unverfälschte Herstellung eines Bäckereiprodukt-Teiges durch Vermeidung der Beigabe von Hefen nur durch händischen Transport des Vorteiges in Behältern zwischen den einzelnen Herstellungsschritten realisiert werden, da der Sauerteig bei geringen Teigausbeuten bisher aufgrund seiner sehr hohen Zähigkeit als nicht mechanisch förderfähig gegolten hat. Da die Überwindung dieses Vorurteils der Fachwelt durch Anwendung des erfindungsgemäßen Verfahrens möglich ist, können auch ohne Einsatz von künstlich beigegebenen Hefen Bäckereiprodukte in einem großtechnischen Maßstab erzeugt werden.

Die mechanische Förderung des Sauerteiges zwischen zwei oder mehreren Herstellungsschritten kann gemäß einer Weiterbildung des erfindungsgemäßen Verfahrens dadurch geschehen, daß der Sauerteig gepumpt wird. Jede andere, dem Fachmann geläufige mechanische Förderung kann aber ebenso angewandt werden.

Das bisher technisch nicht realisierbare Pumpen des Sauerteiges ohne Zumischen von Wasser eröffnet neue Anwendungsmöglichkeiten für unter Einsatz von natürlichen Hefen erstellte Teige.

Als besonders günstig für die Förderung des Sauerteiges zwischen den Herstellungsschritten der Bäckereiprodukt-Teigherstellung hat es sich erwiesen, daß der Sauerteig bei einer Teigausbeute TA in einem Bereich von 158 -bis 162 mechanisch gefördert oder gepumpt wird.

Eine weitere Ausführungsform der Erfindung kann daher darin bestehen, daß die Vergärung des angemischten Sauerteiges ohne weitere Beigabe von Hefen erfolgt, und daß nachfolgend der natürlich vergorene Sauerteig zur Herstellung eines Bäckereiprodukt-Teiges zu einer nachfolgenden Verarbeitungsstufe mechanisch gefördert wird.

Auf diese Weise ist es möglich, den gereiften Vollsauerteig zu fördern bzw. zu pumpen, nachdem er natürlich vergärt und versäuert gelassen worden ist. Damit ist das Beimengen von verdünnter Hefe in den Brotteig hinfällig und die vorstehend beschriebenen Verfahrensziele werden erreicht.

In Weiterbildung der Erfindung kann die natürliche Vergärung des Sauerteiges in einem oder mehreren separaten Behältern erfolgen, und in einem Vorschritt der Sauerteig angemischt und danach in den oder die Behälter mechanisch gefördert werden.

Gemäß einem weiteren Ausführungsbeispiel der Erfindung kann die Förderung des Sauerteiges ohne Beigabe von Wasser mittels einer Verdrängerpumpe, insbesondere mittels einer Sinuspumpe, durchgeführt werden, sodaß eine exakte Zudosierung ermöglicht wird. Unter Anwendung der Verdrängerpumpe hat es sich gezeigt, daß der vergorene Sauerteig ohne Schwierigkeiten zu einer Weiterverarbeitung weitergefördert werden kann, sodaß nicht nur große Mengen an Sauerteig kontinuierlich gefördert sondern dieser auch entsprechend gesteuert zudosiert werden kann.

Schließlich kann eine weitere Ausbildung der Erfindung darin bestehen, daß die Förderung des angemischten Sauerteiges mittels einer Verdrängerpumpe, insbesondere mittels einer Sinuspumpe, durchgeführt wird. Auf diese Weise gelingt es, den angemischten Grundsauerteig für den Reifeprozeß in großen Mengen in dafür geeignete Behälter zu transportieren.

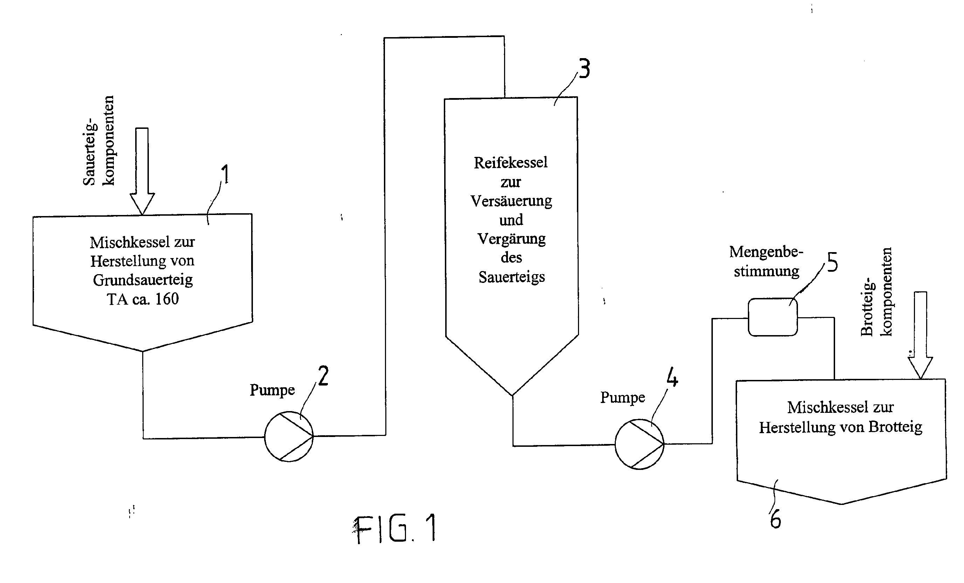

Nachstehend wird die Erfindung anhand des in der Zeichnung dargestellten Ausführungsbeispiels eingehend erläutert. Fig. 1 zeigt dabei eine Prinzipskizze anhand der die Verfahrensschritte gemäß einer Ausführungsform des erfindungsgemäßen Verfahrens dargestellt sind.

In Fig.1 ist ein Verfahren zur Herstellung eines Brotteiges unter Verwendung von Sauerteig gezeigt. Alle anderen möglichen Variationen von Teigen, die auf der Grundlage von Sauerteig hergestellt werden können, sind vom Schutzumfang der Erfindung ebenso umfaßt. Ein Anmischen eines Sauerteiges unter Zuführung von Sauerteigkomponenten und eine Weiterverarbeitung wie z.B. Versäuerung, Vergärung und Verarbeitung zu einem Bäckereiprodukt-Teig erfolgt in mehreren Herstellungsschritten, wobei der Sauerteig zwischen den einzelnen Herstellungsschritten gefördert wird.

Erfindungsgemäß wird der Sauerteig bei einer Teigausbeute TA in einem Bereich von 150 bis 170 - jeweils ohne weiterer Beigabe von Wasser als Mittel zur Verbesserung der Förderfähigkeit - zwischen zumindest zwei der Herstellungsschritte mechanisch gefördert, im gezeigten Ausführungsbeispiel gepumpt.

In bevorzugter Weise geschieht die mechanische Förderung bzw. das Pumpen des Sauerteiges bei einer Teigausbeute TA in einem Bereich von 158 bis 162, besonders bevorzugt bei TA 160.

In einen Mischkessel 1 werden vorerst Sauerteigkomponenten zugeführt und der Sauerteig darin in seinem Grundzustand angemischt. Der angemischte Sauerteig wird in unverdünntem Zustand, also ohne weiterer Beigabe von Wasser - aus dem Mischkessel 1 mittels einer Verdrängerpumpe 2, insbesondere mittels einer Sinuspumpe, über eine Pumpleitung in einen separaten Behälter, und zwar in einen Reifekessel 3 zur Versäuerung und Vergärung des Sauerteiges gefördert.

Eine geeignete Sinuspumpe dieses Typs bietet z.B. die Firma Maso an. Im Reifekessel 3 wird eine biologische Versäuerung mittels exakt gewählter Betriebsparameter gefahren. Es erfolgt eine Vergärung des angemischten Sauerteiges ohne Anwendung von weiteren zusätzlichen beigegebenen Vergärungsorganismen, und danach wird der mit natürlichen Hefen vergorene Sauerteig zur Herstellung eines Bäckereiprodukt-Teiges zu einer nachfolgenden Verarbeitungsstufe, nämlich einem Mischkessel 6 zur Herstellung von Brotteig, in unverdünntem Zustand mechanisch gefördert, wo z.B. Brotkomponenten zugemischt werden.

Die Förderung des vergorenen Sauerteiges in unverdünntem Zustand, also ohne weiterer Beigabe von Wasser als Mittel zur Verbesserung der Förderfähigkeit geschieht im gezeigten Ausführungsbeispiel wieder mittels einer Verdrängerpumpe 4, insbesondere mittels einer Sinuspumpe. Damit ist es möglich, den gereiften Sauerteig über eine Vorrichtung 5 zur Mengenbestimmung als eine Komponente des Brotteiges exakt zu dosieren. Daher ist das Beimengen von verdünnter Hefe in den Brotteig hinfällig und die Ziele der Erfindung sind verwirklicht.

Das mechanische Fördern bzw. Pumpen von sauerteigartigen Gemischen bei Teigausbeuten im Bereich von 150 bis 170 war bisher nie ausgeführt worden, weil die damit verbundenen Schwierigkeiten, wie etwa das Verkleben oder Verstopfen von mechanischen Komponenten unüberwindbar schienen. Das erfindungsgemäße Verfahren wendet diesen Vorgang unter Verwendung bekannter Fördereinrichtungen dennoch an und ermöglicht damit die industrielle Herstellung von Bäckereiprodukten auf Basis von natürlichen Teigkomponenten.

## Patentansprüche

1. Verfahren zur Herstellung eines Bäckereiprodukt-Teiges, wobei ein Anmischen eines Sauerteiges unter Zuführung von Sauerteigkomponenten und eine Weiterverarbeitung wie z.B. Versäuerung, Vergärung und Verarbeitung zu einem Bäckereiprodukt-Teig in zwei oder mehreren Herstellungsschritten erfolgt, und der Sauerteig zwischen den Herstellungsschritten gefördert wird, **dadurch gekennzeichnet, daß** der Sauerteig bei einer Teigausbeute TA in einem Bereich von 150 bis 170 - jeweils ohne weiterer Beigabe von Wasser als Mittel zur Verbesserung der Förderfähigkeit - zwischen zumindest zwei der Herstellungsschritte mechanisch gefördert wird.

2. Verfahren nach Anspruch 1, **dadurch gekennzeichnet, daß** der Sauerteig gepumpt wird.

3. Verfahren nach Anspruch 1 oder 2, **dadurch gekennzeichnet, daß** der Sauerteig bei einer Teigausbeute TA in einem Bereich von 158 bis 162 mechanisch gefördert oder gepumpt wird.

4. Verfahren nach Anspruch 1, 2 oder 3, **dadurch gekennzeichnet, daß** die Vergärung des angemischten Sauerteiges ohne weiterer Beigabe von Vergärungsmechanismen erfolgt,
und daß nachfolgend der ausschließlich natürlich vergorene Sauerteig zur Herstellung eines Bäckereiprodukt-Teiges zu einer nachfolgenden Verarbeitungsstufe mechanisch gefördert wird.

5. Verfahren nach Anspruch 4, **dadurch gekennzeichnet, daß** die Vergärung des Sauerteiges in einem oder mehreren separaten Behältern (3) erfolgt, und daß in einem Vorschritt der Sauerteig angemischt und danach in den oder die Behälter (3) mechanisch gefördert wird.

6. Verfahren nach Anspruch 4 oder 5, **dadurch gekennzeichnet, daß** die Förderung des vergorenen Sauerteiges ohne Beigabe von Wasser mittels einer Verdrängerpumpe (4), insbesondere mittels einer Sinuspumpe, durchgeführt wird, sodaß eine exakte Zudosierung ermöglicht wird.

7. Verfahren nach Anspruch 5 oder 6, **dadurch gekennzeichnet, daß** die Förderung des angemischten Sauerteiges mittels einer Verdrängerpumpe (2), insbesondere mittels einer Sinuspumpe, durchgeführt wird.
